# EUROPÄISCHE PATENTSCHRIFT

(11) **EP 3 366 257 B1**
(45) Veröffentlichungstag und Bekanntmachung des Hinweises auf die Patenterteilung: **30.09.2020**
(21) Anmeldenummer: 18166561.3
(22) Anmeldetag: 12.03.2015
(51) Int. Cl.: A61C 7/28, A61C 7/30, A61C 7/14

(54) **EINSETZTEIL UND BASISPLATTE FÜR EIN KIEFERORTHOPÄDISCHES BRACKET**
INSERT AND BASE PLATE FOR AN ORTHODONTIC BRACKET
PIÈCE D'INSERTION ET PLAQUE DE BASE POUR UNE ATTACHE ORTHODONTIQUE

(30) Priorität: 18.03.2014 CH 4112014
(43) Veröffentlichungstag der Anmeldung: 29.08.2018
(62) Teilanmeldung aus: 15709673.6
(73) Patentinhaber: Von Mandach, Christoph, 5225 Bözberg (CH)
(72) Erfinder: Von Mandach, Christoph, 5225 Bözberg (CH)
(74) Vertreter: Schneider Feldmann AG Patent- und Markenanwälte

(56) Entgegenhaltungen:
- JP-A- H0 312 147
- US-A- 2 665 480
- US-A- 3 543 404
- US-A- 4 487 581
- US-A1- 2005 255 422

## Beschreibung

Die vorliegende Erfindung betrifft ein Einsetzteil und eine Basiplatte für ein kieferorthopädisches Bracket. Mit einer über die Basisplatte schwenkbaren Klappe ist ein im Bracket direkt oder mittelbar geführter Drahtbogen fixierbar.

Kieferorthopädische Brackets sind auf dem Markt in einer sehr grossen Vielfalt erhältlich. Heute werden Brackets aus Metall, Keramik und Kunststoff gefertigt. All diese Materialien benötigen eine relativ dicke Basisplatte auf der der Drahtbogen aufliegt und die seitliche Wände aufweist die den sogenannten Slot bilden. Mit Ausnahme des Kunststoffes haben die Materialien eine gewisse Sprödheit und eine zu dünne Basisplatte würde die Festigkeit des Brackets wesentlich beeinflussen. Bei der Kunststofffertigung ist weniger die Sprödheit des Materials ein Problem sondern vielmehr deren Elastizität. Diese Elastizität führt schnell zu Verformungen des Brackets die zu einer unpräzisen Führung des Drahtbogens im Slot führt oder deren Bewegung darin praktisch vollständig blockiert.

Diese Probleme führen dazu, dass kieferorthopädische Brackets auch heute noch eine relativ hohe Bauhöhe aufweisen, nämlich eine Bauhöhe von mindestens 1,5mm.

Auch die flächige Ausdehnung des Brackets beziehungsweise die Länge der Führung des Drahtes so klein wie möglich zu gestalten, wäre wünschenswert. Je nach Gebiss ist die Grösse der Zähne insbesondere im frontalen unteren Bereich sehr klein. Die meisten heute auf dem Markt erhältlichen Brackets weisen einen Slot auf, dessen Länge ca. 3mm beträgt. Auch hier ist von der Gestaltung der Brackets her eine Reduktion der Grösse praktisch nicht möglich. Dies führt aber dazu, dass der Raum zwischen zwei benachbarten Brackets klein ist. Ist aber diese Distanz sehr klein, so besteht hier praktisch nur eine geringe Verformungsmöglichkeit des Drahtbogens, um die entsprechenden korrigierenden Bewegungen durchführen zu können.

Ein weiteres Problem bei den bisher bekannten kieferorthopädischen Brackets, unabhängig von der Materialwahl, besteht darin, dass die den Drahtbogen sichernden Klappen über ein Scharnier mit entsprechender Scharnierachse realisiert werden müssen. Dies lässt sich nicht in einem einzigen einfachen Herstellungsvorgang realisieren, sondern benötigt entsprechende Montage die bei der Kleinheit der Brackets relativ aufwendig ist. Auch kann der Behandler die Klappen bei Bedarf nur bei wenigen Brackets auswechseln.

Je kleiner die kieferorthopädischen Brackets sind und je komplexer die selbstlegierende Mechanik ist, umso grösser wird die Gefahr, dass überschüssiger Klebstoff sie funktional unbrauchbar macht. In Bezug auf die Positionierung sind kleinere Brackets zwar vorteilhafter, da dank der Kleinheit Problemzonen eines Zahnes besser genutzt und somit das Bracket auch entsprechend optimal platziert werden kann, aber dafür wird die genaue Ausrichtung anspruchsvoller, werden Fehler häufiger und mit ihnen die Feinjustierung am Ende der Behandlung wesentlich aufwendiger.

Bereits in der EP 1 482 857 hat der Erfinder entsprechende Mittel offenbart, die das Anbringen des Klebstoffes auf das Bracket und das Positionieren des Brackets auf dem Zahn erleichtern. Hierzu wurde dort bereits ein Protektor vorgeschlagen, der in etwa eine gegengleiche Hohlform aufweist in dem das zu platzierende und mit Klebstoff zu versehende Bracket einsetzbar ist, sowie einen Applikator, der sich kraft- und/oder formschlüssig im Bracket hält und nach der Ausrichtung auf dem Zahn und der Härtung des Klebstoffes wieder entfernbar ist. Mit diesen an sich bekannten Hilfsmitteln lassen sich auch die erfindungsgemässen, besonders flachen Brackets, einfach handhaben.

US3543404 A offenbart ein Einsetzteil und ein Basisplatte eines kieferorthopädisches Brackets, wobei eine erste Kante der Basisplatte einen zu einem Scharnierlager um mehr als 180° und weniger als 360° eingerollten Bereich bildet, und eine der ersten Kante gegenüberliegende zweite Kante der Basisplatte um 180° zu einem eingerollten Bereich eingerollt ist, welcher mittelbar mit Hilfe des Einsetzteils der Führung und/oder Halterung eines kieferorthopädischen Drahtbogens dient, wobei das Einsetzteil zur Führung und/oder Halterung des Drahtbogens auswechselbar in die Basisplatte einsetzbar ist, wobei das Einsetzteil einen Fortsatz aufweist, der formlich so gestaltet ist, dass er form- und/oder kraftschlüssig in einen umgebogenen Bereich der zweiten Kante der Basisplatte passt, wobei das Einsetzteil einen Retentionsfortsatz aufweist, der gegenüber dem Fortsatz angeformt ist und der im eingesetzten Zustand des Einsetzteils mit der ersten Kante der Basisplatte im Eingriff steht. Es ist nun die Aufgabe der vorliegenden Erfindung ein Einsetzteil für kieferorthopädische Brackets anzugeben, das viele Anpassungen zur Kraftübertragung auf den Zahn zulässt und mit unterschiedlichen Drahtbögen verwendbar ist.

Diese Aufgabe löst ein Einsetzteil und eine Basisplatte eines kieferothopädischen Brackets gemäss dem Patentanspruch 1.

Die neue Lösung erklärt sich als ein Einsetzteil für einen Bausatz bestehend aus einer auf den Zahn zu klebenden Basisplatte, in deren zur Okklusion hin gerichteten Seite ein Scharnierlager ausgeformt ist, in das eine Klappe als auswechselbare Feder zu einem Scharnier verschwenkt wird, die beim Verschliessen einen Drahtbogen in der Ausformung eines Einsetzteiles in zwei senkrecht zu einander verlaufenden Flächen hineindrückt. Der frühere Edgewiseslot wird nun mittels diesem auswechselbaren Einsetzteiles auf zwei senkrecht stehende Ebenen reduziert und die üblichen Brackets mit verschiedenen Slotdimensionen durch eine frei wählbare Klappe ersetzt, die den Drahtbogen auf die senkrechten Ebenen des Einsetzteiles drückt. Das System basiert in erster Linie auf der Kraft, die von der Klappe ausgeht und nicht auf deren Formschlüssigkeit des Drahtbogens im Slot. Das massgebliche Element zur Kontrolle der Kraft ist die bevorzugterweise als Rollfeder gestaltete Klappe.

Die Suche nach den kleinsten und gleichzeitig stabilsten Bauteilen als Bracketbasen und -klappen führt zur Biegestanztechnik von Blech. Die gefundene Lösung bringt den kieferorthopädischen Drahtbogen auf ca. 0,35 mm, bei einer Miniaturausführung sogar auf 0,15mm an die Zahnoberfläche heran. Damit liegt der Drahtbogen 0,25 mm bzw. 0,45 mm näher am Zahn als beim bisher kleinsten Bracket. Weiter misst das Profil auf Höhe des Drahtes und kauseitig davon maximal 1,3 mm, bei der Miniaturausführung insgesamt nur 0,65mm. Das bisher kleinste Backet verlangt Gummi-Ohrringe und misst damit im Vergleich mind. 1,7 mm.

Zur Optimierung des Brackets des Bausatzes trägt Phynox ® eine Kobalt-Chrom-Nickel - Legierung bei, die nicht nur für den zahnärztlichen Gebrauch geeignet ist, sondern wegen seinen hervorragenden Eigenschaften zur Langzeitimplantation zugelassen ist. Insbesondere hat diese Legierung die Eigenschaft, als gewalztes Blech enorm bearbeitungsfreundlich zu sein, in dem es sich sehr leicht schneiden, stanzen und verformen lässt und bei 530° Celsius und 3 Stunden Wärmebehandlung ohne sich zu Verformen in ein Material verwandelt, das an Festigkeit und Federhärte die härtesten Stähle übertrifft. Die Funktion des Bausatzes mit einem Bracket und einem Einsetzteil erklärt sich wie folgt: Statt einer Nut bzw. einem Slot wie beim Edgewise und Tipedgebracket dienen zwei senkrecht zueinander stehende Ebenen, auf die eine als Klappe gestaltete Feder den kieferorthopädischen Drahtbogen aufdrückt. Je grösser die Kraft. umso grösser ist auch die Übertragung eines Drehmomentes quer zum Drahtbogenverlauf bzw. Torque. Es werden allerdings auch ein Drehmoment entlang des Verlaufs des Drahtbogens übertragen und eines bezüglich der Rotationsstellung des Zahnes. Das Drehmoment entlang des Drahtbogenverlaufs nennt die Kieferorthopädie Aufrichtung oder Angulation im Unterschied zur Inklination, die mit dem Torque und der Ebene senkrecht zum Verlauf des Drahtbogens verbunden ist.

Der Bausatz mit auswechselbaren Einsetzteilen vermeidet die häufige Klemmwirkung eines Drahtbogens im Slot. Dies dadurch, dass der starre Slot durch die lediglich zwei senkrecht zueinander verlaufenden Anlageflächen gebildet ist, die durch eine wählbare, geeignete Klappe in Form einer elastischen Feder ersetzt ist. Mit der Forderung einen Zahn möglichst senkrecht zum Drahtbogen zu bewegen, sind grosse Kräfte verbunden, die entsprechende Drahtbogendimensionen nach sich ziehen. Mit der Grösse nimmt die Kongruenz zwischen Drahtbogen und Slot zu und als Folge stellt sich eher eine Klemmwirkung ein. Dies insbesondere, weil Vierkantdrahtbögen auf kleine Schäden und Formveränderungen anfällig sind, die sie in Folge des Kauaktes und der Verwendungsdauer erfahren. Zusammenfassend lässt sich somit sagen, dass die Klappe bei bisherigen Brackets weitestgehend zur Sicherung der Lage des Drahtbogens im Slot gedient hat, jedoch bei der Kraftausübung auf den zu bewegenden Zahn nur eine Nebenrolle gespielt hat, während die Lösung den Drahtbogen neue Bewegungsfreiheiten bietet, ein Verklemmen oder Verkanten vermeidet und die Klappe eine kraftregulierende Wirkung ausübt.

Es ist besonders vorteilhaft, wenn eine erste Kante der Basisplatte um mehr als 180° und weniger als 360° einen zu einem Scharnierlager eingerollten Bereich bildet, wobei in diesem Bereich eine, als Lagerachse wirkende, eingerollte Kante der Klappe einführbar und durch relative Verschwenkung beider Teile zueinander zu einem Scharnier montierbar ist. Hierdurch lässt sich eine separate Achse vermeiden.

Eine weitere bevorzugte Ausführungsform sieht vor, dass die der ersten Kante gegenüberliegende zweite Kante um 180° eingerollt ist und direkt oder mittelbar der Führung des Drahtbogens dient. Hat der Drahtbogen im Querschnitt eine runde Form, so kann dieser direkt in diese um 180° eingerollte Kante eingelegt werden. Ist nun die Klappe in den geschlossenen Zustand geschwenkt, so arretiert die Klappe den Drahtbogen. Hierzu weisen bevorzugterweise sowohl die Klappe als auch die zweite Kante der Basisplatte Formschlussmittel auf, die beim Schliessen der Klappe miteinander in Eingriff gelangen. Der Bausatz sieht vor, dass in der zweiten Kante ein der Lagerung und Führung eines Drahtbogens mit rechteckigem Querschnitt dienendes Einlegeteil form- und kraftschlüssig gehalten ist.

Weitere vorteilhafte Ausführungsformen gehen aus den Ansprüchen hervor und deren Bedeutung und Wirkungsweise werden in der nachfolgenden Beschreibung mit Bezug auf die anliegenden Zeichnungen erläutert.

Es zeigt:
- Figur 1: Die Basisplatte des selbstliegierenden Brackets in perspektivischer Darstellung und
- Figur 2: in Seitenansicht sowie
- Figur 3: in einer Ansicht von oben.
- Figur 4: zeigt eine zu der Basisplatte gemäss den in Figuren 1-3 passende Klappe in perspektivischer Darstellung und
- Figur 5: dieselbe Klappe in der Seitenansicht sowie
- Figur 6: in der Ansicht von oben. In der
- Figuren 7 - 12: ist die Basisplatte gemäss den Figuren 1-3 und die Klappe gemäss den Figuren 4-6 zum vollständigen Bracket zusammengebaut in verschiedener Ansicht dargestellt.
- Figuren 13 - 15: zeigen verschiedene Ansichten eines ersten Einlegeteiles für sich allein und
- Figuren 16 - 17: in einem Bracket eingelegt ist.
- Figuren 18 - 20: zeigen ein zweites Einlegeteil in verschiedenen Ansichten und
- Figuren 21 - 22: dieses Einlegeteil in einem Bracket eingelegt.
- Figuren 23 - 25: zeigen eine zweite bevorzugte Ausführungsform einer Klappe zur Kombination mit einer Basisplatte gemäss den Figuren 1 - 3 für sich allein und
- Figuren 26 - 28: zusammengebaut mit der Basisplatte und kombiniert mit einem Einlegeteil im geschlossenen und geöffneten Zustand.
- Figuren 29 - 31: zeigen eine zweite Ausführungsform der Basisplatte in verschiedenen Ansichten und
- Figuren 32 - 34: eine zur Basisplatte der zweiten Ausführungsform passende Klappe in verschiedenen Ansichten.
- Figuren 35 - 38: zeigen die Basisplatte gemäss den Figuren 29 - 31 kombiniert mit der Klappe der Figuren 32 - 34 im offenen und geschlossenen Zustand ohne und mit eingelegten Drahtbogen.
- Figur 39: zeigt eine weitere Variante einer Klappe in perspektivischer Darstellung und
- Figur 40: diese Klappe kombiniert mit einer Basisplatte gemäss Figuren 29 - 31.
- Figur 41: zeigt mehrere über Solltrennstellen verbundene Einlegeteile für eine Basisplatte gemäss Figuren 29 - 31.
- Figuren 42 - 46: zeigen solche Einlegeteile in der Verwendung mit einer Basisplatte gemäss Figuren 29 - 31, wobei sich die Einlegeteile der Figuren 42 - 44 im Neigungswinkel der Anlageflächen für den Drahtbogen variieren, je nach gewünschtem Torque-Winkel.
- Figuren 47 - 48: zeigen zwei Ansichten eines Torquebestimmungselementes eingesetzt in einer Basisplatte. Schliesslich zeigt
- Figur 49: eine Basisplatte mit einem Protektor.

Der Gedanke des vorliegenden Bausatzes besteht darin, ganz allgemein selbstlegierende Brackets aus Blech zu formen. Hierbei wird man insbesondere nichtrostende Federstahllegierungen oder Kobalt-Chrom-Nickel Legierungen verwenden, die insbesondere Chrom, Kobalt, Nickel, Molybdän oder Vanadium enthalten. Insbesondere sind nicht korrodierende säurebeständige Bleche geeignet. Bevorzugterweise wird man Bleche mit einer Dicke zwischen 0,1 und 0,4 mm insbesondere zwischen 0,2 und 0,3 mm einsetzen.

Mittels Stanz-Biegewerkzeuge lassen sich so die beiden Bracketteile, nämlich die Basisplatte 100 und die Klappe 200, mit hohen Taktgeschwindigkeiten fertigen. Die fertig geformten Teile wird man vorteilhafterweise im Gleitschliffverfahren entgraten bzw. die Kanten runden. Um bei den hier angewendeten Blechen trotz der Dünnheit eine genügende Festigkeit zu erreichen wird ein kaltgewalztes, weiches Kobalt-Chrom Blech verwendet, welches sich sehr gut verarbeiten und anschliessend zu sehr grosser Härte vergüten lässt. Solche Bleche aus Kobalt-Chrom-Nickellegierungen sind auf dem Markt unter der Bezeichnung Phynox z.B. von der Firma Matthey SA bekannt.

Die Verwendung von Blech bei der Fertigung von Brackets führt zu einer grossen Zahl verschiedener Ausführungsmöglichkeiten, die bis anhin weder bekannt noch machbar waren. In der vorliegenden Anmeldung sind diverse Ausführungsbeispiele im Detail dargestellt, die nachfolgend ausführlich beschrieben werden.

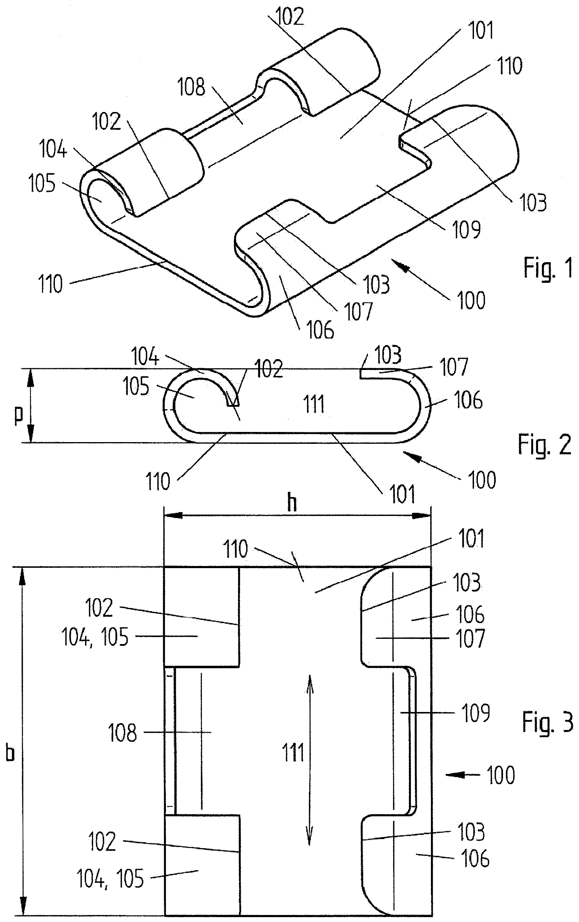

Die Figuren 1-3 zeigen eine Basisplatte 100 in einer ersten Ausführungsform. Diese Basisplatte besteht wie bereits zuvor ausgeführt aus einem korrosionsbeständigen Blech, insbesondere einem Blech aus einer Kobalt-Chrom-Nickellegierung. Die Basisplatte hat eine Grundfläche 101. Diese Grundfläche wird seitlich begrenzt durch zwei senkrecht zur Okklusionsebene verlaufende Kanten 110. Diese Kanten werden hier Okklusionskanten benannt. Senkrecht zu den Okklusalkanten 110 ist eine erste Kante mit 102 bezeichnet und eine zweite Kante mit 103. Nach der Stanzung werden diese beiden Kanten eingerollt. Dies ist am deutlichsten in der Figur 2 in der Seitenansicht erkennbar. Der eingerollte Bereich der ersten Kannte 102 ist mit 104 bezeichnet während der eingerollte Bereich der zweiten Kante 103 mit 106 bezeichnet ist. Der erste eingerollte Bereich 104 ist um mehr als 180° und weniger als 360° eingerollt. Bevorzugterweise wie hier dargestellt, beträgt der Einrollwinkel zwischen 240° und 300°. Insbesondere beträgt dieser Einrollwinkel wie in der Figur dargestellt 270°. Dieser eingerollte Bereich 104 der ersten Kante bildet ein Scharnierlager 105 für eine hier noch nicht dargestellte Klappe 200.

Der eingerollte Bereich 106 der zweiten Kante 103 liegt dem ersten eingerollten Bereich 104 der ersten Kante 102 direkt gegenüber. Hier beträgt der Einrollwinkel mindestens annähernd 180°. Die Einrollung beginnt nicht direkt bei der zweiten Kante 103 sondern leicht einwärts versetzt so dass ein horizontaler Endbereich 107 entsteht. Dieser quasi horizontale Endbereich 107 läuft in etwa parallel zur Grundfläche 101. Es kann vorteilhaft sein, diesen sogenannten horizontalen Endbereich 107 um wenige Grad, beispielsweise 1° und 5°, zur Grundfläche 101 hin geneigt zu gestalten. Der Grund hierfür besteht darin, dass dieser zweite eingerollte Bereich 106 dazu dient einen im Querschnitt runden hier noch nicht dargestellten Drahtbogen 300 zu führen oder ein Einsetzteil zu halten. Hat dieser quasi horizontale Endbereich 107 eine leichte Inklination zur Grundfläche 101 hin, so lässt sich ein im Querschnitt runder Drahtbogen unter leichter elastischer Verformung des eingerollten Bereiches 102 hineindrücken wobei der Drahtbogen eine genügende Führung hat ohne dass dieser hinausfällt bevor der Drahtbogen durch die noch zu beschreibende Klappe 200 in seiner Position gesichert ist.

Der eingerollte Bereich 104 der ersten Kante weist zudem eine mittig ausgestanzte Schwenkausnehmung 108 auf. Der eingerollte Bereich 106 der zweiten Kante 103 besitzt eine ebenfalls mittige, weniger tiefe Ausnehmung, die als Arretierausnehmung 109 bezeichnet wird. Die Bedeutung der beiden Ausnehmungen wird später im Zusammenhang des zusammengebauten Brackets noch weiter erläutert.

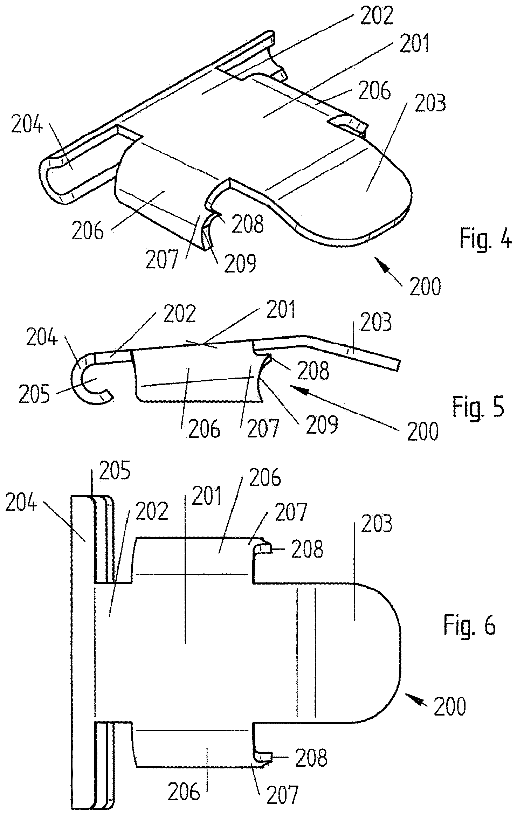

In den Figuren 4-6 ist die Klappe 200 jeweils für sich allein in verschiedenen Ansichten dargestellt. Die Figur 4 zeigt die Klappe 200 in perspektivischer Ansicht. Die Klappe besitzt einen flachen Dachbereich 201 der via einem Hals 202 mit einem eingerollten Bereich 204 verbunden ist. Dieser eingerollte Bereich 204 bildet eine Scharnierachse 205. Der Scharnierachse 205 gegenüber ist der flache Dachbereich 201 leicht nach unten abgewinkelt und bildet eine Drucklasche 203. Diese Drucklasche 203 ist hier endseitig halbrund gestaltet. Seitlich am flachen Dachbereich 201 ist beidseitig je ein seitlicher Flügel 206 angeformt. Die beiden Flügel 206 weisen an den in Richtung zur Drucklasche hin gerichteten Seitenkanten Formschlussmittel 207 auf. Diese Formschlussmittel 207 sind hier in der Form von Arretiernocken 208 gestaltet. Von der Spitze der Arretiernocken 208 verläuft ein gerundeter Kantenbereich 209 zum unteren Ende des jeweiligen Flügels 206. Dieser gerundete Kantenbereich 209 besitzt einen Radius, der mindestens annähernd dem Radius eines einzulegenden Drahtbogens 300 entspricht. Hierauf wird später nochmals eingegangen.

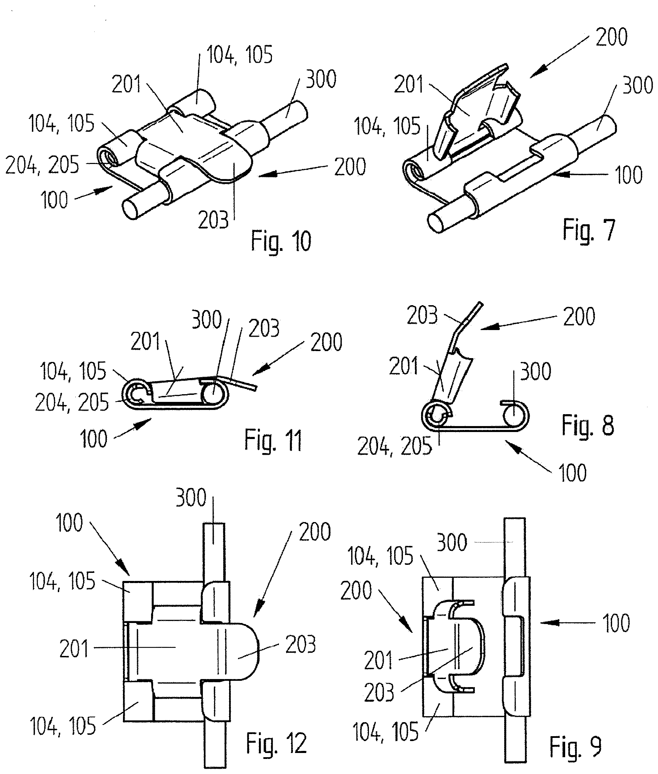

In den Figuren 7-9 ist nun das gesamte Bracket, bestehend aus Basisplatte 100 und Klappe 200 in zusammengebautem, offenen Zustand dargestellt. Rein symbolisch ist auch zur Erläuterung ein Drahtbogen-Abschnitt gezeigt, da der gesamte Drahtbogen selbstverständlich sehr viel länger ist. Der Drahtbogen 300 selbst ist jedoch nicht Teil des Brackets sondern hierzu kann ein entsprechendes auf dem Markt erhältliches Produkt verwendet werden. Diese Drahtbogen werden bezüglich ihrer Dimension in Inches angegeben. Diese Drahtbogen oder Bögen bestehen entweder aus Stahl oder aus Nickeltitan mit einem sogenannten Memory-Effekt. Diese im Handel zwar erhältlichen Drahtbogen mitrundem Querschnitt werden nicht hängig verwendet. Daher werden hier Einlegeteile eingesetzt für Drahtbogen mit rechteckigem Querschnitt, wie noch zu beschreiben ist.

Für den Zusammenbau des Brackets bestehend aus der Basisplatte 100 und der Klappe 200 führt man die Klappe um über 90° geschwenkt so zur Basisplatte 100 hin, dass der Hals 202 der Klappe 200 in die Schwenkausnehmung 108 des eingerollten Bereiches 104 der ersten Kante 102 zu liegen kommt. Durch eine Schwenkbewegung der Klappe 200 in Schliessrichtung wälzt sich nun der eingerollte Bereich 204 der Klappe 200 in den eingerollten Bereich 104 der ersten Kante 102. Bevorzugt gestaltet man den Radius des eingerollten Bereiches 104 der ersten Kante 102 bezüglich seines Innendurchmessers geringfügig kleiner als der Aussendurchmessers des eingerollten Bereiches 204 der Klappe 200. Beim Zusammenfügen wird nunmehr der eingerollte Bereich 104 der ersten Kante 102 leicht gespreizt und der eingerollte Bereich 204 der Klappe 200 leicht zusammengedrückt. Dies führt dazu, dass die Klappe in jeder geöffneten Zwischenlage verbleibt und der behandelnde Kieferorthopäde freien Zugang hat um den Drahtbogen 300 in den eingerollten Bereich 106 der Basisplatte 100 oder in einem Einsetzteil einzusetzen. Insbesondere in der Seitenansicht gemäss der Figur 7 erkennt man nun, wie der eingerollte Bereich 104 der ersten Kante zu einem Scharnierlager 105 wird und der eingerollte Bereich 204 der Klappe 200 nun als Scharnierachse 205 wirkt.

In den beiden Figuren 10 - 12 ist nun das Bracket wie in den Figuren 7 - 9 dargestellt im geschlossenen Zustand gezeigt. Figur 10 zeigt dabei eine perspektivische Ansicht, Figur 11 eine Seitenansicht und Figur 12 eine Aufsicht auf das Bracket. Im geschlossenen Zustand übergreift die Drucklasche 203 den eingerollten Bereich 106 der zweiten Kante 103. Hierbei kommt die Drucklasche 203 in den Bereich der Arretierausnehmung 109 zu liegen. Hierdurch bleibt das gesamte Bracket äusserst flach und ein Drehmoment auf die Klappe 200 wird in der Arretierausnehmung 109 aufgefangen. Dies wird auch noch durch die seitlichen Flügel 206 begünstigt. Der Arretiernocken 208 untergreift dabei das freie Ende des zweiten eingerollten Bereiches 106 der zweiten Kante, bzw. den horizontalen Endbereich 107. Damit ist die Klappe 200 relativ zur Basisplatte 100 in ihrer Position arretiert. Somit bildet das Formschlussmittel 207 mit der zweiten Kante 103 der Basisplatte 100 einen Formschluss. Nach unten am Arretiernocken 208 anschliessend liegt nun im geschlossenen Zustand des Brackets die gerundete Kante 109 am Drahtbogen 300 an. Der Drahtbogen 300 ist nun ebenfalls in seiner gewünschten Position fixiert.

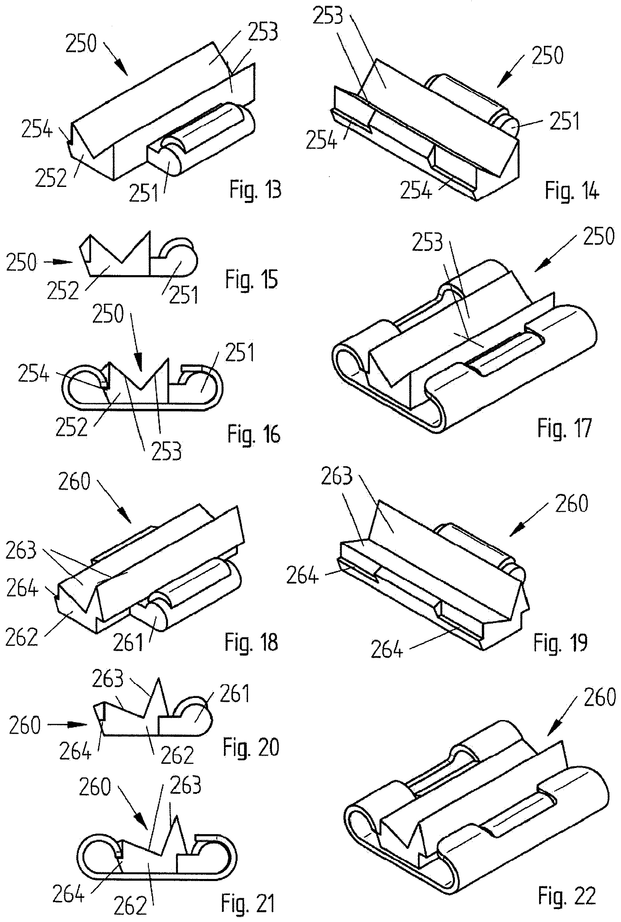

In den Figuren 13 - 15 ist ein erstes Ausführungsbeispiel eines Einlegeteiles 250, welches zur Lagerung und Führung eines Drahtbogens mit rechteckigem oder quadratischem Querschnitt dient, für sich allein in verschiedenen Ansichten dargestellt. Diese erste Ausführungsform des Einlegeteiles ist insgesamt mit 250 bezeichnet. Es besitzt einen Fortsatz 251 welcher formlich so gestaltet ist, dass der Fortsatz 251 form- und/oder kraftschlüssig in den umgebogenen Bereich der zweiten Kante 103 der Bracketbasisplatte 100 passt. Diese Ausführung der Bracketbasisplatte entspricht der Miniaturausführung die eine besonders geringe Höhe der Basisplatte aufweist. Der Fortsatz 251 ist einstückig an einem Zentrumsabschnitt 252 angeformt. In diesem Zentrumsabschnitt sind zwei Führungsflächen 253 im Winkel von 90° zueinander eingeformt. Diese prismatische Führung ist so gelegt, dass die Führungsflächen 253 im eingebauten Zustand in der Bracketbasisplatte zu dessen Grundfläche 101 einen Winkel von 45° einschliesst. Dem Fortsatz 251 gegenüber ist ein Retensionsfortsatz 254 angeformt, der zur Aufnahme der ersten Kante 102 der Basisplatte 100 dient. Wie ersichtlich besetzt der Fortsatz 251 eine zentrische, den Fortsatz verdickende Wulst, die im eingebauten Zustand des Einsetzteiles 250 in die Basisplatte 100 in die Arretierausnehmung 109 des umgebogenen Bereiches 106 der zweiten Kante 103 eingreift. Hiermit ist der Einsetzteil gegen seitliche Verschiebungen gesichert. Senkrecht zu den seitlichen Verschiebungen ist der Einsetzteil ebenfalls gehalten in dem einerseits der Fortsatz 251 formschlüssig in die Umbiegung 104 der ersten Kante liegt und andererseits die zweite Kante 103 auf den Retensionsfortsatz drückt. Damit ist der Einsetzteil 250 in alle Richtungen gesichert in der Basisplatte 101 gehalten.

Diese Situation ist aus den Figuren 16 und 17 deutlich ersichtlich.

In den Figuren 18 - 20 ist nun eine zweite Ausführungsform des Einsetzteiles dargestellt. Diese zweite Ausführungsform ist mit 260 bezeichnet. Auch diese Ausführungsform hat einen Fortsatz 261 der form- und/oder kraftschlüssig in den umgebogenen Bereich der zweiten Kante 103 hineinpasst und auf der gegenüber liegenden Seite eines Zentrumsabschnittes 262 wiederum einen Retentsionsfortsatz 264 besitzt der im eingebauten Zustand mit der ersten Kante 102 zusammenwirkt. Auch hier sind wiederum zwei Führungsflächen 263 in einem Winkel von 90° zueinander vorhanden. Hierbei besitzt aber eine Führungsfläche eine Inklination von rund 20° zur Grundfläche 101 der Basisplatte 100 im eingebauten Zustand, während die andere Führungsfläche 263 somit eine Inklination von 70° zur Grundfläche 101 besitzt. Die Halterung des Einsetzteiles 260 in der Basisplatte 100 bleibt somit in gleicher Weise erhalten. Dies ist aus den Figuren 21 und 22 ersichtlich.

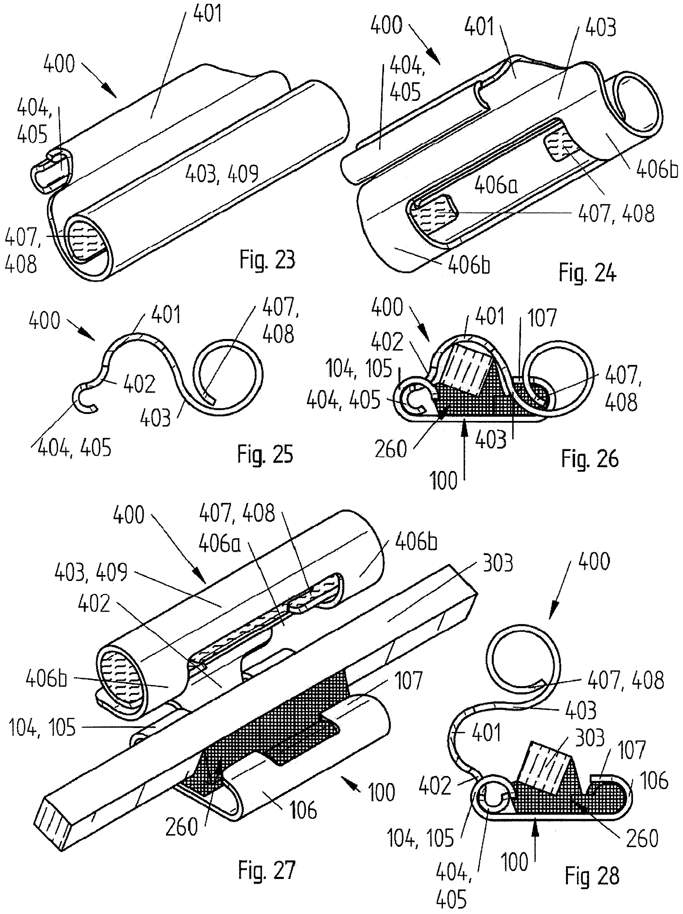

Die Figuren 23 - 25 zeigen eine alternative Form einer Klappe, die hier mit 400 bezeichnet ist. Während die erste Ausführungsform der Klappe 200 relativ starr ist, ist diese Klappe 400 vielmehr als eine Feder gestaltet. Auch diese Klappe 400 hat einen ersten eingerollten Bereich 404 mit kleinem Radius, der als Scharnierachse 405 dient, und einen gewölbten Dachbereich 401 der hier allerdings gewellt gestaltet ist. Als Druck- bzw. Haltelasche dient ein etwa schneckenförmig eingerollter Bereich 403, der als Rollfeder bezeichnet wird. Die Rollfeder 403 besitzt ebenfalls ein Formschlussmittel, welches dazu dient, eine entsprechend angepasste Basisplatte im eingerollten Bereich 106 zu übergreifen und mit seinem gewölbten Dachbereich 401 einen Drahtbogen 303 mit rechteckigem Querschnitt in die gewünschte Position zu drücken.

Die Figuren 26 - 28 zeigen die Verwendung der Basisplatte 100 mit einem Einsetzteil 250 zur Führung eines Drahtbogens 303 mit rechteckigem Querschnitt. Dieses Einsetzteil 250 wie in den Figuren 13 - 22 dargestellt, wird von der Rollfeder 403 übergriffen. Hierbei erlaubt ein Ausschnitt 406a in der Rollfeder, ein Umgreifen des umgebogenen Bereiches 106 der zweiten Kante 103 der Basisplatte 100, mittels den seitlichen Führungsbereichen 406b. Formschlussausnehmungen 407 in der Rollfeder 403 erlauben das Eingreifen des Endstückes 107 formschlüssig in die Rollfeder 403. Hierbei wirkt die Kante der Formschlussausnehmung 407 als Arretiernocken 408.

Auch bei dieser Ausführung der Klappe als Rollfeder ist zwischen dem Dachbereich 401 und der Biegung 404, die als Scharnierachse 405 dient, ein Hals 402 vorhanden. Die Rollfeder weist hier zudem mindestens eine parallel zur Scharnierachse 405 verlaufende, in die Rollfeder eingeformte Sicke als Querverstrebung 409.

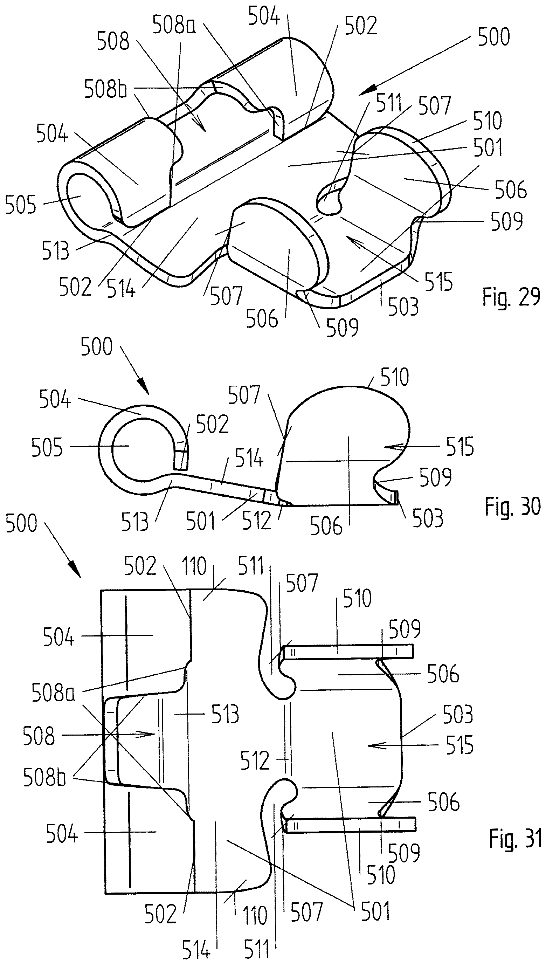

In den Figuren 29 - 31 ist nun eine zweite Ausführungsform einer Basisplatte zur Bildung eines kieferorthopädischen Brackets dargestellt. Diese zweite Ausführungsform der Basisplatte ist mit 500 bezeichnet. Auch diese Basisplatte 500 besitzt eine Grundfläche 501. Deren erste Kante 502 besitzt einen umgebogenen Bereich 504. Dieser umgebogene Bereich 504 bildet ein Scharnierlager 505. Der ersten Kante 502 gegenüber ist eine zweite Kante 503 vorhanden. Die Grundfläche 501 der Basisplatte 500 wird begrenzt durch zwei einander gegenüber liegende Einschnitte 511 und sie bilden die Begrenzung von zwei einander gegenüberliegenden Seitenkantenabschnitte 506 die parallel, senkrecht zur Grundfläche 501 der Basisplatte aufgebogen sind. Zwischen diesen beiden umgebogenen Seitenkantenabschnitte 506 verläuft die Grundfläche 501 weiter bis zur zweiten Kante 503. Die umgebogenen Seitenkantenabschnitte 506 besitzen zur Okklusionsebene ausgerichtete Kanten 507.

Der umgebogene Bereich 504 der ersten Kante 502 besitzt wiederum eine Schwenkausnehmung 508. Diese Schwenkausnehmung 508 besitzt eine Erweiterung 508a zur Einführung der Klappe. Die Schwenkausnehmung 508a läuft dann zu einer Verengung 508b zusammen die der Sicherung der Klappe und Fixation derselben in geöffneter Stellung dient.

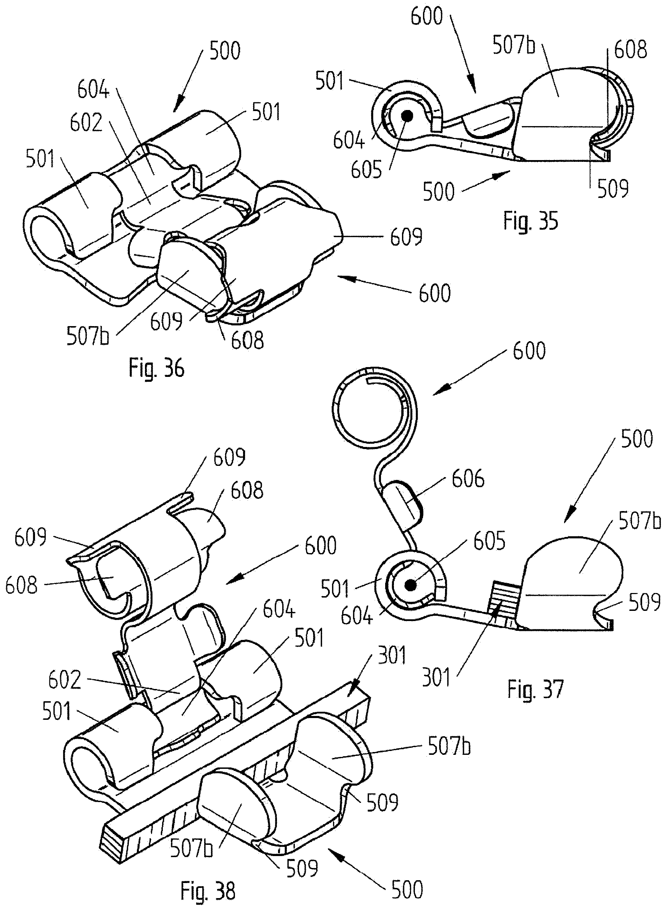

Den zur Okklusionsebene ausgerichteten Kanten 507 gegenüber sind an den umgebogenen Seitenkantenabschnitten 506 Arretierungsausnehmungen 509 eingeformt. Diese dienen der Fixierung der Klappe 500 im geschlossenen Zustand. Die Seitenkantenabschnitte 506 besitzen eine gerundete Oberkante 510 die dem Tragekomfort dienen. Die Form der Einschnitte 511 in die Seitenkanten die die Abgrenzung zu den nach oben umgebogenen Seitenkantenabschnitte dienen, ist am deutlichsten in der Fig. 31 ersichtlich. Bekanntlich sind die Zahnoberflächen nicht plan und entsprechend weist die Grundfläche der Basisplatte 501 eine erste Biegung 512 und eine zweite Biegung 513 auf die beide der Anpassung an die Anatomie des Zahnes dienen. Dies ist aber nicht zwingend erforderlich, da wegen der Kleinheit der Basisplatte 500 die Unebenheiten des Zahnes durch den Klebstoff 900 ausgeglichen werden können. Der Bereich 515 ist im montierten Zustand am Zahn vertikal verlaufend bzw. senkrecht zu den Kanten 507. Zwischen den beiden umgebogenen Seitenkanalabschnitten 506 verläuft ein schützender Führungskanal für die Klappe, wie dies noch anhand der Figuren 35 - 38 zu beschreiben ist.

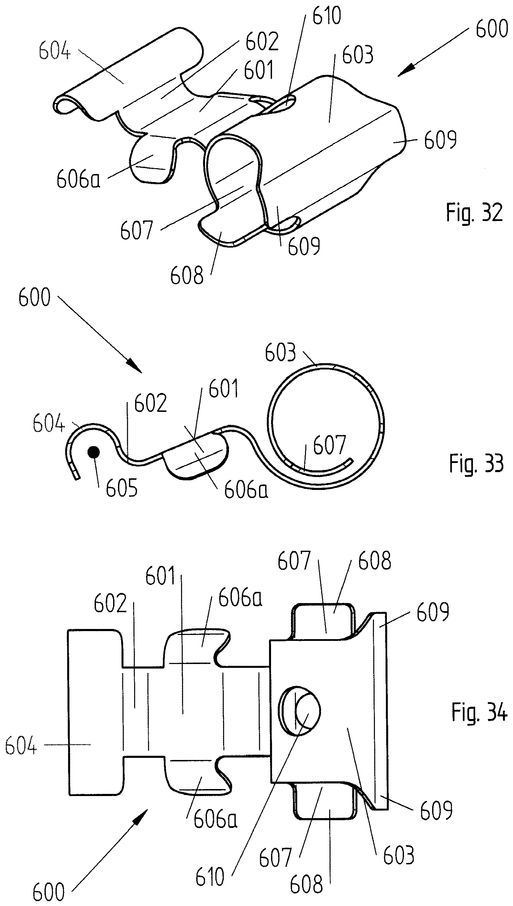

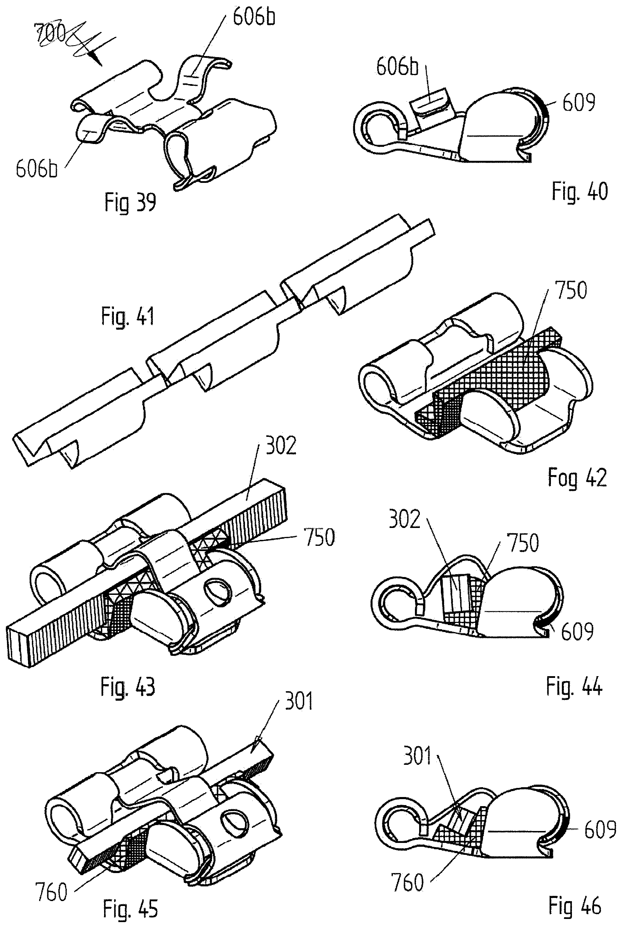

In den Figuren 32 - 34 ist nun eine zweite Ausführungsform einer Klappe dargestellt. Diese Klappe ist insgesamt mit 600 bezeichnet. Sie besitzt wiederum einen flachen Dachbereich 601 dem ein Hals 602 anschliesst dem wiederum ein umgebogener Teil 604 mit kleinem Biegungsradius folgt. Das Zentrum dieser Biegung 604 bildet die nicht körperlich vorhandene Scharnierachse 605. Am Dachbereich 601 sind zwei seitliche Flügel 606 angeformt. In der Ausführung gemäss den Figuren 32 - 34 sind diese seitlichen Flügel 606 vom flachen Dachbereich 601 in Richtung zur Basisplatte 500 hin umgebogen. Bei einer Variante, wie dies die Figuren 39 und 40 zeigen sind diese seitlichen Flügel mehr nach oben gebogen und dienen so insbesondere zum Anbringen von Ligaturen oder für Gummiketten oder Elastics falls dies erforderlich ist. Diese speziell gestalteten seitlichen Flügel sind mit 606b bezeichnet.

Am flachen Dachbereich 601 anschliessend an der dem Hals 602 gegenüber liegenden Seite ist eine Drucklasche als Teil einer Rollfeder 603 gestaltet und geformt. Diese Rollfeder besitzt seitlich vorstehende Arretiernocken 608 als Formschlussmittel 607. Diese Arretiernocken 608 greifen im geschlossenen Zustand der Klappe 600 in Seitenkantenabschnitte 506 der Basisplatte 500 ein. Zusätzlich kann eine Sicke zur Sicherung gegen Überlastung vorgesehen sein. Diese Sicke ist mit 609 bezeichnet. In der Als Rollfeder gebildeten Drucklasche 603 ist zudem eine Bohrung 610 als Hilfsmittel zur Öffnung der Klappe 600 eingeformt.

In den Figuren 36 - 38 ist nunmehr die Klappe 600 gemäss den Figuren 32 - 34 mit der Basisplatte 500 gemäss den Figuren 29 - 31 zusammengebaut im geschlossenen Zustand unter Weglassung des Drahtbogen dargestellt. In den Figuren 37 und 38 ist nun ein Vierkantdrahtbogen 301 eingelegt, während die Klappe 605 noch im geöffneten Zustand gezeigt ist. Hier ist der Drahtbogen 301 mit richtigem Querschnitt ohne Zuhilfenahme eines Einsetzteiles verwendet. Dabei liegt die eine Kante des Drahtbogens direkt auf der Grundfläche 501 auf während die andere Seitenkante des Drahtbogens an den Kanten 507 zur Anlage kommt. Auch bei dieser Ausführungsform des Brackets wird die Basisplatte kombiniert meist mit verschiedenen Formen von Einsetzteilen, die hier mit 750 bezeichnet sind, verwendet. Die Figur 41 zeigt, wie mehrere solche Einsetzteile zu einem Stab geformt herstellbar sind und über Sollbruchstellen miteinander trennbar verbunden sind. Die Einsetzteile 750 besitzen wiederum einen Fortsatz, der hier zwischen den beiden umgebogenen Seitenkantenabschnitten zu liegen kommt. Zudem liegen sie aber auch noch an den Kanten 507 dieser umgebogenen Seitenkantenabschnitten 506 an. Dabei wird man den Fortsatz so gestalten, dass dieser Form- und Kraftschlüssig zwischen den beiden parallelen Seitenkantenabschnitten gehalten ist. Wiederum können diese Einsetzteile unterschiedliche Neigungen der Führungsflächen relativ zur Grundfläche aufweisen und entsprechend ist ein Einsetzteil mit 750 bezeichnet, während ein zweites mit anderer Neigung zur Grundfläche mit 760 bezeichnet wie dies in den Figuren 45 und 46 zu sehen ist. Bei den Ausführungen gemäss den Figuren 43 - 46 sind die seitlichen Flügel 606 vollständig weggelassen, da diese keineswegs zwingend erforderlich sind.

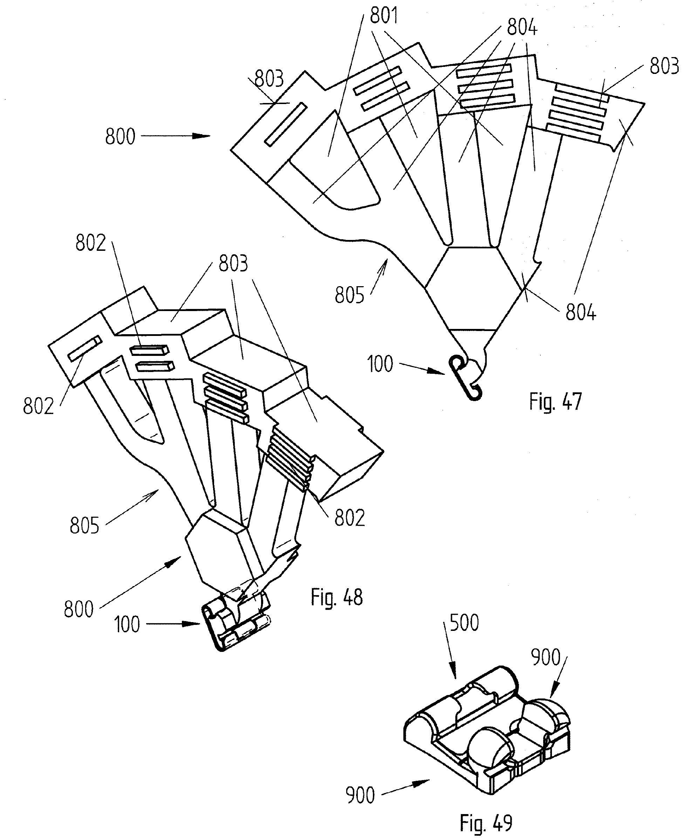

Schliesslich zeigen die beiden Figuren 47 und 48 eine Lehre, zur Einschätzung des Torques. In Verbindung dazu sind die Einsetzteile 250, 260, 750 so abgestuft, dass sie sich jeweils um einen Winkel von 6,6° unterscheiden. Wie heute übliche linguale 2D-Bracket-Systeme, sind die Basisplatten mit der Bezeichnung 100 nicht auf die Inklination ausgerichtet, sondern nur auf die Höhe bezüglich der Okklusionsebene, der Angulation und der Rotation. Damit will in erster Linie ein minimales Bauprofil erreicht werden. Das Bracket will aber darüber hinaus zusätzlich die präzise Justierung der einzelnen Zähne mit Vierkantdrähten ermöglichen. Während der stets üblichen Nivellierungsphase, die auch stets mit runden Drähten beginnt, dient die minimale Bauhöhe durch die Verwendung des eingerollten Bereiches der zweiten Kante 106 dem maximal möglichen Komfort für den Patienten. In vielen Fällen ist mit der Nivellierung auch bereits der Bedarf und der Wunsch des Patienten erfüllt. Wenn aber eine weitergehende Justierung der einzelnen Zähne erforderlich ist und Vierkantdrähte nötig werden, dient die Lehre zur Einschätzung des Torques, um die Ausrichtung der Basisplatte bezüglich der Okklusionsebene zu bestimmen. Die Lehre lässt sich in die Basisplatte einklemmen, wodurch in Ruhe direkt am Patienten über die Richtungsanzeige, die Relation zur Okklusionsebene abgeschätzt werden kann. Liegt sie genau senkrecht zum Beispiel zur Markierung 3, dann ist das entsprechende Einsetzelement auszuwählen. Liegt sie eher senkrecht zur Markierung 2 oder 4, dann ist je nach Ausmass, jenes zu wählen, das mehr zu 3 oder eben mehr zu 2 oder 4 passt. Einschnitte 801 verbessern die Sichtbarkeit. Es sind Anzeigen 803 vorhanden, die mit Kennzeichnungen 802 versehen sind und jeweils unterschiedliche Ausrichtungen bezüglich der Okklusionsebenen mit einer Abweichung von jeweils 20° zu kennzeichnen. Die Anzeigen 803 sind Arme 804 angeformt, die die Senkrechte zur Okklusionsebene verlaufen. Schliesslich ist auch noch ein Ausschnitt 805 für die Inzisalkante vorhanden. Letztlich zeigt die Figur 49 eine Basisplatte 100, die hier auf einen nicht dargestellten Zahn mittels Klebstoff 900 gehalten ist. Um sicher zu stellen, dass der Klebstoff nicht in den Bereich der eingerollten Bereiche bzw. auf die Oberseite der Basisplatte gelangt, wird ein Protektor 900 angebracht. Der Protektor 900 nimmt somit die Basisplatte formschlüssig auf, unter Freilassung der Klebfläche. Nach dem Anbringen kann dann ein Applikator über den Protektor aufgesetzt werden, der die Positionierung auf dem Zahn erleichtert.

Während die beiden Hauptbestandteile des Bausatzes nämlich die Basisplatte und die Klappe wie bereits erwähnt bevorzugt aus einem Blech aus Kobalt-Chrom-Nickellegierung gefertigt sind.

Der Einsetzteil kann neben der Lagerung von Drahtbogen auch zur verbesserten Halterung von Schienen dienen. Sowohl Drahtbogen als auch Schiene werden als kieferorthopädische Hilfsmittel bezeichnet. Für die verbesserte Halterung der Schiene lassen sich ein Einsetzteil je nach der Gestaltung der Schiene die Führungsflächen 253 nutzen oder in diese Retentionskanten einformen, die mit gegengleichen Ausformungen an die Schienen formschlüssig verbindbar sind.

Der Bausatz, der nur aus drei Teilen besteht, nämlich der Basisplatte und der Klappe und dem Einsetzteil, ersetzt nun eine riesige Anzahl unterschiedlichster kieferorthopädische Brackets. Auch wenn hier zwei Varianten von Basisplatten und vier Varianten von Klappen, so wie zwei Ausführungen von Einsetzteilen vorgeschlagen werden, so erlauben diese eine genügende Kombinationsvielfalt, um praktisch allen üblichen Erfordernisse für die kieferorthopädische Praxis abzudecken ohne ein riesiges Lager an kostspieligen Brackets an Lager zu halten, da hier das Bracket vom Behandler aus wenigen Teilen fallspezifisch zusammenstellbar ist.

### Bezugszeichenliste:

- 100: Basisplatte des Brackets
b = Breite der Basisplatte
h = Höhe der Basisplatte
p = Profil der Basisplatte
- 200: Klappe
- 250: Einsetzteil
- 260: Einsetzteil
- 300: Drahtbogen (rund)
- 301: Drahtbogen (vierkant) 0.45mm x 0.55mm
- 302: Drahtbogen (vierkant) 0.55mm x 0.70mm
- 303: Drahtbogen (vierkant) 0.40mm x 0.40mm
- 400: Klappe als Rollfeder
- 500: Basisplatte alternative Form
- 600: Klappe
- 750: Einsetzteil
- 760: Einsetzteil
- 800: Lehre zur Basisplatte passend zur Einschätzung des Torques
- 900: Protektor
- 101: Grundfläche der Basisplatte
- 102: erste Kante
- 103: zweite Kante
- 104: umgebogener Bereich der ersten Kante
- 105: Scharnierlager
- 106: umgebogener Bereich der zweiten Kante
- 107: gerades, paralleles Endstück des umgebogenen Bereiches 106
- 108: Schwenkausnehmung in 104
- 109: Arretierausnehmung in 106
- 110: Seitenkanten
- 111: schützender Führungskanal für Klappe 1a

- 201: flacher Dachbereich
- 202: Hals
- 203: Drucklasche
- 204: Biegung mit kleinem Radius
- 205: Scharnierachse
- 206: seitliche Flügel
- 207: Formschlussmittel
- 208: Arretiernocken
- 209: gerundete Kanten

- 250: Einsetzteil zur Führung
- 251: Fortsatz in den umgebogenen Bereich der zweiten Kante greifend
- 252: Zentrumsabschnitt
- 253: Führungsflächen im Winkel von 90°
- 254: Retentionsfortsatz zur ersten Kante
- 260: Einsetzteil, Variante
- 261: Fortsatz in den umgebogenen Bereich der zweiten Kante
- 262: Zentrumsabschnitt
- 263: Führungsflächen im Winkel von 90°
- 264: Retentionsfortsatz zur ersten Kante
- 401: gewölbter Dachbereich
- 402: Hals
- 403: Drucklasche als Teil der Klappe 400 die als Rollfelder gestaltet ist
- 404: Biegung mit kleinem Radius
- 405: Scharnierachse
- 406a: Ausschnitt
- 406b: seitlicher Führungsbereich
- 407: Formschlussausnehmungen
- 408: Arretiernocken
- 409: Querverstrebung
- 501: Grundfläche der Basisplatte
- 502: erste Kante
- 503: zweite Kante
- 504: umgebogener Bereich der ersten Kante
- 505: Scharnierlager
- 506: umgebogener Seitenkantenabschnitt
- 507: zur Okklusionsebene ausgerichtete Kanten
- 508: Schwenkausnehmung
- 508a: Erweiterung zur Einführung der Klappen 2a, 2b
- 508b: Verengung zur Sicherung der Klappen und Fixation der Klappen in geöffneter Stellung
- 509: Arretierungsausnehmungen
- 510: gerundete Oberkante des Seitenkantenabschnittes
- 511: Einschnitt der Seitenkanten
- 512: erste Biegung zur Anpassung der Bracketbasis an die Anatomie des Zahnes
- 513: zweite Biegung zur Anpassung der Bracketbasis an die Anatomie des Zahnes
- 514: vertikale, bzw. senkrecht zu den Kanten 507 ausgerichteter Bereich
- 515: schützender Führungskanal für Klappe 2a und 2b
- 601: flacher Dachbereich
- 602: Hals
- 603: Drucklasche als Rollfeder
- 604: Biegung mit kleinem Radius
- 605: Scharnierachse
- 606: seitliche Flügel insbesondere für feine Drähte
- 606b: seitliche Flügel für Gummi-Ketten oder Elastics
- 607: Formschlussmittel
- 608: Arretiernocken
- 609: Sicke zur Sicherung gegen Überlastung
- 610: Bohrung(en) als Hilfsmittel zur Öffnung
- 700: Klappe für Elastics
- 750: Reihe von identischen Torque-Elementen
- 801: Ausschnitte zur besseren Sichtbarkeit
- 802: Bezeichnung
- 803: Anzeige der Okklusionsebene im Winkel von jeweils 20°
- 804: Arme zur Anzeige der Senkrechten bezüglich der Okklusionsebene
- 805: Ausschnitt für die Inzisalkanten

## Patentansprüche

1. Einsetzteil und Basisplatte (100) eines kieferorthopädisches Brackets; wobei eine erste Kante (102) der Basisplatte (100) einen zu einem Scharnierlager (105) um mehr als 180° und weniger als 360° eingerollten Bereich (104) zur Aufnahme einer Klappe bildet, und eine der ersten Kante (102) gegenüberliegende zweite Kante (103) der Basisplatte (100) um 180° zu einem eingerollten Bereich (106) eingerollt ist, welcher mittelbar mit Hilfe des Einsetzteils (250, 260) der Führung und/oder Halterung eines kieferorthopädischen Drahtbogens (300 - 303) dient; wobei das Einsetzteil (250, 260) zur Führung und/oder Halterung des Drahtbogens (300 - 303) auswechselbar in die Basisplatte (100) einsetzbar ist; wobei das Einsetzteil (250, 260) einen Fortsatz (251, 261) aufweist, der formlich so gestaltet ist, dass er form- und/oder kraftschlüssig in einen umgebogenen Bereich der zweiten Kante (103) der Basisplatte (100) passt; wobei das Einsetzteil (250, 260) einen Retentionsfortsatz (254) aufweist, der gegenüber dem Fortsatz (251) angeformt ist und der im eingesetzten Zustand des Einsetzteils (250, 260) mit der ersten Kante (102) der Basisplatte (100) im Eingriff steht.

2. Einsetzteil und Basisplatte (100) eines kieferorthopädisches Brackets nach Anspruch 1, **dadurch gekennzeichnet, dass** im Einsetzteil (250, 260) zwei einen rechten Winkel einschliessende Drahtbogenführungsflächen (253, 263) eingeformt sind.

3. Einsetzteil und Basisplatte (100) eines kieferorthopädisches Brackets nach einem der vorangehenden Ansprüche, **dadurch gekennzeichnet, dass** das Einsetzteil (250, 260) aus Kunststoff gefertigt ist.

4. Einsetzteil und Basisplatte (100) eines kieferorthopädisches Brackets nach einem der vorangehenden Ansprüche, **dadurch gekennzeichnet, dass** der Fortsatz (251, 261) einstückig an ein Zentrumsabschnitt (252, 262) des Einlegeteils (250, 260) angeformt ist.

5. Einsetzteil und Basisplatte (100) eines kieferorthopädisches Brackets nach Anspruch 4, **dadurch gekennzeichnet, dass** die zwei Drahtbogenführungsflächen (253, 263) in den Zentrumsabschnitt (252, 262) eingeformt sind.

6. Einsetzteil und Basisplatte (100) eines kieferorthopädisches Brackets nach einem der vorangehenden Ansprüche, **dadurch gekennzeichnet, dass** der Fortsatz (251, 261) eine zentrische, den Fortsatz (251, 261) verdickende Wulst besitzt, die zur Sicherung gegen seitliche Verschiebung im eingesetzten Zustand des Einsetzteils (250, 260) in eine Arretierausnehmung (109) der zweiten Kante (103) des Basisteils (100) eingreift.

## Claims

1. An insert part and base plate (100) for an orthodontic bracket; wherein a first edge (102) of the base plate (100) forms a region (104) which is crimped by more than 180° and less than 360° in order to form a hinge bearing (105) for receiving a flap, and a second edge (103) of the base plate (100) which is opposite to the first edge (102) is crimped by 180° to form a crimped region (106) which, with the aid of the insert part (250, 260), serves to centrally guide and/or retain an orthodontic arch wire (300 - 303); wherein the insert part (250, 260) can be interchangeably inserted into the base plate (100) in order to guide and/or retain the arch wire (300 - 303); wherein the insert part (250, 260) has an extension (251, 261) the shape of which is such that it fits into a bent region of the second edge (103) of the base plate (100) in a positive locking and/or non-positive locking manner; wherein the insert part (250, 260) has a retaining extension (254) which is formed opposite to the extension (251) and which engages with the first edge (102) of the base plate (100), when the insert part (250, 260) has been inserted.

2. The insert part and base plate (100) for an orthodontic bracket as claimed in claim 1, **characterized in that** two arch wire guide surfaces (253, 263) which enclose a right angle are formed in the insert part (250, 260).

3. The insert part and base plate (100) for an orthodontic bracket as claimed in one of the preceding claims, **characterized in that** the insert part (250, 260) is produced from plastic.

4. The insert part and base plate (100) for an orthodontic bracket as claimed in one of the preceding claims, **characterized in that** the extension (251, 261) is integrally formed on a central section (252, 262) of the insert part (250, 260).

5. The insert part and base plate (100) for an orthodontic bracket as claimed in claim 4, **characterized in that** the two arch wire guide surfaces (253, 263) are formed in the centre section (252, 262) .

6. The insert part and base plate (100) for an orthodontic bracket as claimed in one of the preceding claims, **characterized in that** the extension (251, 261) has a central bead which makes the extension (251, 261) thicker and which engages into a locking recess (109) of the second edge (103) of the base part (100) in order to secure the insert part (250, 260) against lateral displacement when in the inserted position.

## Revendications

1. Pièce d'insertion et plaque de base (100) d'une attache orthodontique ; dans laquelle un premier bord (102) de la plaque de base (100) constitue une partie (104) enroulée en un palier de charnière (105) de plus de 180° et de moins de 360° et destinée à recevoir un volet, et un second bord (103) opposé au premier bord (102) de la plaque de base (100) est enroulé de 180° en une partie (106) qui sert directement, avec l'aide de la pièce d'insertion (250,260) à guider et/ou à maintenir un arc en fil orthodontique (300 - 303) ; la pièce d'insertion (250,260) servant à guider et/ou à maintenir l'arc en fil (300 - 303) étant insérable de manière échangeable dans la plaque de base (100) ; la pièce d'insertion (250,260) présentant un prolongement (251,261) qui est conformé de manière à s'ajuster en correspondance géométrique et/ou mécanique dans une partie recourbée du deuxième bord (103) de la plaque de base (100) ; la pièce d'insertion (250,260) présentant un prolongement de rétention (254) qui est formé à l'opposé du prolongement (251) et qui, en état inséré de la pièce d'insertion (250,260), est en prise avec le premier bord (102) de la plaque de base (100).

2. Pièce d'insertion et plaque de base (100) d'une attache orthodontique selon la revendication 1, **caractérisée en ce que** deux surfaces de guidage de fil arqué (253,263) circonscrivant un angle droit sont formées dans la pièce d'insertion (250,260).

3. Pièce d'insertion et plaque de base (100) d'une attache orthodontique selon une des revendications précédentes, **caractérisée en ce que** la pièce d'insertion (250,260) est fabriquée en plastique.

4. Pièce d'insertion et plaque de base (100) d'une attache orthodontique selon une des revendications précédentes, **caractérisée en ce que** le prolongement (251,261) est formé en une pièce au niveau d'une section centrale (252,262) de la pièce d'insertion (250,260).

5. Pièce d'insertion et plaque de base (100) d'une attache orthodontique selon la revendication 4, **caractérisée en ce que** les deux surfaces de guidage d'arc en fil (253,263) sont formées dans la section centrale (252,262) .

6. Pièce d'insertion et plaque de base (100) d'une attache orthodontique selon une des revendications précédentes, **caractérisée en ce que** le prolongement (251,261) possède un bourrelet centré épaississant le prolongement (251,261) et qui, pour établir une sécurité contre le décalage latéral à l'état inséré de la pièce d'insertion (250,260), s'engrène dans un évidement d'arrêt (109) du deuxième bord (103) de la pièce de base (100).
